# EUROPEAN PATENT SPECIFICATION

(11) **EP 3 204 661 B1**
(45) Date of publication and mention of the grant of the patent: **21.11.2018**
(21) Application number: 15808263.6
(22) Date of filing: 09.10.2015
(51) Int. Cl.: F16D 65/12

(54) **METHOD FOR MAKING BRAKE DISCS IN MATERIAL REINFORCED WITH FIBRES AND BRAKE DISC MADE WITH SUCH METHOD**
HERSTELLUNGSVERFAHREN FÜR SCHEIBENBREMSSCHEIBEN AUS FIBERVERSTÄRKTEM MATERIAL UND SCHEIBENBREMSSCHEIBE HERGESTELLT DURCH SO EIN VERFAHREN
PROCEDE DE MANUFACTURE D'UN DISQUE D'UN FREIN À DISQUE EN MATERIAU RENFORCÉE PAR DES FIBRES ET UN TEL DISQUE D'UN FREIN À DISQUE

(30) Priority: 10.10.2014 IT BG20140044
(43) Date of publication of application: 16.08.2017
(73) Proprietor: Petroceramics S.p.A., 24040 Stezzano (BG) (IT)
(72) Inventor: VALLE, Massimiliano, 20133 Milano (IT)
(74) Representative: Zanettin, Gianluigi
(86) International application number: PCT/IB2015/057731
(87) International publication number: WO 2016/055975

(56) References cited:
- WO-A1-2013/171770
- DE-A1- 4 438 456
- US-A- 2 175 399
- US-A- 3 956 545
- US-A- 6 042 935

## Description

### Field of application

This invention relates to a method for making brake discs in material reinforced with fibres and a brake disc made with such method.

### State of the art

A brake disc of a disc braking system of a vehicle comprising an annular structure, or braking band, and a central fastening element, known as a bell, through which the disc is fixed to the rotating part of a vehicle suspension, for example a hub. The braking band is provided with opposed braking surfaces suitable to cooperate with friction elements (brake pads), housed in at least one calliper body placed astride such braking band and integral with a non-rotating component of the vehicle suspension. The controlled interaction between the opposite brake pads and the opposed braking surfaces of the braking band determining a braking action by friction that allows the deceleration or stopping of the vehicle.

Generally, the brake discs are made of metal, particularly grey cast iron or steel. In particular, grey cast iron allows to obtain good braking performance (especially in terms of containment of wear) at relatively low cost.

Metal brake discs metal have strong limitations due to weight and are not able to ensure the braking performance required in high-range vehicles and racing cars. In these sectors, metal discs have, therefore, been replaced long ago by discs made of carbon-carbon (CC) or carbo-ceramic (CCM) material. In fact, discs made of carbon-carbon or carbo-ceramic combine lightness with mechanical, chemical and dimensional stability, ensuring high braking performance.

Generally, both types of material (carbon-carbon and carbon-ceramic) are reinforced with fibres. In fact, the presence of fibres significantly improves all the characteristics of the disc and, in particular, mechanical strength and heat transmission properties. In this sense, the arrangement of the fibres in the disc plays an essential role.

Fibre-reinforced materials have a support matrix that acts as a binder for the fibres. The matrix cooperates with the fibres in the transfer of stresses applied to the material and protects the fibres from damage. The matrix is generally made by subjecting, to suitable thermal treatments (in particular, heating and pyrolysis or carbonisation), organic resins and additives, which vary depending on the type of materials to be obtained and/or the final characteristics of the material itself. Among the most used organic resins, phenolic and epoxy resins are to be mentioned.

The fibres can have a random arrangement, or be oriented according to one or more preferential directions. There are also materials that contain both randomly placed and oriented fibres. The fibres can be dispersed in the matrix in the form of filaments or bundles of filaments, as well as being organised in the form of woven or non-woven fabrics. The reinforcement fibres can be of various types. The most used are carbon fibres.

WO2013/171770A1 discloses a shaped composite material and a method for producing it. More specifically, this document discloses a disc for a disc brake made from ceramic composite materials, usually known as "CMC", i.e. "Carbon Material Ceramic" or "CCM", i.e. "Carbon Ceramic Material". These materials consist of carbon matrices containing carbon fibres usually infiltrated with silicon and a product of reaction between C and Si, silicon carbide (SiC). More specifically, the documents concerns a shaped composite material comprising an inner layer of CCM C/SiC/Si material comprising disorderly short filaments consisting mainly of carbon and respective outer layers of C/SiC/Si material and having an orderly fabric structure of mainly carbon fibres.

Generally, a method for making a disc brake, in CC or CCM, provides as an initial step the realisation of a shaped semi-finished piece (green body).

The green body can be obtained by moulding a mixture of resins, fibres and additives. The fibres may be arranged inside the mould already mixed with the resins and additives, or they can be arranged inside the mould separately from the mixture of resins and additives, so as to be able to suitably orient them.

Alternatively, the green body can be obtained by superimposing layers of fibres in the form of woven or non-woven fabrics, previously impregnated with resin binders (pre-preg) and cut according to the shape of the disc. Still alternatively, the green body can be obtained by winding around a mandrel fibres or bundles of fibres previously impregnated with resin binders. With respect to the technique of formation by simple moulding, the formation of the green body by winding on a mandrel allows more easily and effectively adjusting the orientation of the fibres inside the disc brake. However, the fibres turn out to have a prevalently circumferential or coil-shaped orientation. They can then generate coil-shaped structures that are not coherent with each other in the radial direction. This may be to the detriment of the mechanical and thermal properties of the disc itself.

In general, it is known to arrange the fibres according to specific orientations in order to give the green body and the final disc specific mechanical and/or particular thermal properties. For example, a circumferential orientation of the fibres allows contrasting the propagation of destructive radial cracks from the centre to the periphery, with an overall increase of mechanical strength.

The step of formation of the green body necessarily involves a heat treatment aimed at creating a cross-linking, at least partial, of the resin. In fact, the green body must have mechanical strength characteristics such as to make it manipulatable in successive steps of the process without the risk of fractures or cracks.

The green body thus obtained is then subjected to a thermal process of baking at a temperature such as to cause the carbonisation or pyrolysis of the resins. Due to this baking, the semi-finished piece acquires a certain porosity because of the loss of volatile material at the carbonisation or pyrolysis temperatures.

If one must obtain a disc in CC, the carbonisation step is followed by a step of densification with carbon, which can be obtained by impregnation with liquid resins or by vapour deposition. This can be followed in sequence by further carbonisation and densification steps, until the internal porosity is completely filled.

If one must obtain a disc in CCM, the carbonisation step is followed by a step of densification with silicon infiltration. The molten silicon penetrates into the carbonaceous body so as to react with the carbon in silicon carbide and lead to the formation of a ceramic structure. This is generally followed by antioxidant treatments and mechanical processing and surface finishing steps.

The disc thus obtained is then completed by associating it to a bell.

The traditional methods described above for making disc brakes made of fibre-reinforced material are operationally complex and expensive. The initial step of making the green body appears to be especially onerous. It is, in fact, a very delicate step of the process as it determines the distribution of the fibres in the disc.

As mentioned above, the green body must have mechanical strength characteristics such as to make it manipulatable in successive steps of the process without the risk of fractures or cracks. To avoid the formation of tensions inside the body, the thermal treatment should not be too energetic. Therefore, very slow thermal profiles are adopted. This is particularly important in the case of green bodies obtained by winding of fibres on a mandrel. In fact, the layered structure of the fibres is more subject to tensions and deformations compared to a structure with randomly arranged fibres. This results in a lengthening of process times and, therefore, increased costs.

From this point of view, making brake discs in CC or CCM reinforced with fibres provided with ventilation channels accentuates the problems explained above. In fact, unless one provides a step of creating ventilation channels by removing material (with all the connected operational complications), ventilation channels can only be made by inserting suitable cores in the green body in formation, inside the mould or around the mandrel. This significantly complicates the initial formation step of the green body.

There is, therefore, a much felt need, in the production of brake discs in CC or CCM reinforced with fibres, to simplify the production processes by adopting solutions that minimise process times for making the single brake disc and, at the same time, allow obtaining mechanically coherent discs.

### Presentation of the invention

This need is satisfied by a method for making brake discs in fibre-reinforced material according to claim 1.

In particular, this need is satisfied by a method for making brake discs in fibre-reinforced material (each brake disc comprising a braking band having a predefined thickness), comprising the following operating steps:
a) providing a winding mandrel 10, having a predefined outer diameter D1;
b) forming at least one layer of fibres 20 having a predefined width W;
d) winding the fibre layer around the mandrel 10 to form a coaxially hollow cylindrical body 30, having a predefined outer diameter De and an inner diameter Di substantially equivalent to the diameter D1 of the mandrel 10, the fibre layer being wound around the mandrel according to at least one winding direction substantially parallel to the direction of the length L of the layer 20;
p) needling the cylindrical body at least according to a substantially radial direction so as to direct at least a part of the fibres of the fibre layer 20 according to this direction by arranging such fibres in connection between two or more adjacent coils of the fibre layer wound around the mandrel.

Preferably, the needling is carried out substantially at the winding area of the fibre layer around the cylindrical body being formed.

In particular, the needling is performed at a surface coil of the layer of fibres not yet subjected to the heating performed in step e).

Advantageously the needling is performed at a predefined radial depth, depending on the number of coils to be involved, starting from the surface of the cylindrical body being formed.

According to a preferred form of implementation, the method comprises a step f) of cutting the semi-finished cylindrical body in slices transversely to the longitudinal axis of the cylindrical body itself according to the predefined thicknesses s1.

Each slice obtained by cutting the cylindrical body is a disc-shaped body 31. The single disc-shaped body may define, already in itself, at least the braking band of a brake disc or it can define an annular portion of the thickness of the braking band of a disc brake.

Alternatively, the cylindrical body can be dimensioned so as to define, already in itself, a single disc-shaped body that defines at least the braking band of a disc brake, without subjecting it to the above cutting step f).

During winding step d), a pressure can be applied to the fibre layer being wound to make the portion of fibre layer being wound adhere to the cylindrical body being formed.

The pressure can be applied to the fibre layer by means of tensioning the layer itself and/or by means of pressure rollers disposed near the mandrel.

Advantageously, during winding step d), the winding direction of said at least one layer of fibres around the mandrel is varied to vary the orientation of the fibres inside the cylindrical body being formed.

According to a particular form of implementation of the method, said at least one layer of fibres 20 has an orientation of the fibres and/or composition variable along its length and/or width.

During winding step d), several layers of fibres 20 can be wound around the mandrel, having different orientations and/or composition of the fibres.

According to a particular form of implementation of the invention, the method comprises a step c) of impregnating the fibre layer 20 with at least one resin binder prior to step d) of winding around the mandrel.

The fibre layer could be obtained by extrusion and subsequent drawing of a mixture comprising plasticising components and fibres.

Preferably, the method comprises a step e) of heating the coaxially hollow cylindrical body at temperatures and for a period of time such as to at least partially cross-link the binder resin so as to obtain a solid, semi-finished cylindrical body.

Preferably, step e) of heating the coaxially hollow cylindrical body is conducted at temperatures and for a period of time such as to only partially cross-link the binder resin so as to obtain a solid, semi-finished cylindrical body that is still plastically deformable.

Preferably, the heating of the cylindrical body being formed is conducted so as to obtain inside the cylindrical body being formed, the smallest possible thermal gradient within the body itself, preferably null.

Advantageously, the heating of the cylindrical body being formed can be also conducted in a differentiated manner as a function of the area of the cylinder being formed. As will be taken up again below, the composition and the internal structure of the cylinder can vary radially in order to impart different properties to different zones of the cylinder. For example, it is possible to differentiate the composition and structure between the braking surface and area of attachment of the bell. The differentiated heating as a function of the zone of the cylinder being formed can, therefore, also be exploited to adapt to production needs linked to differences of composition of the fibres.

According to a particular form of implementation of the method, step e) of heating the cylindrical body is conducted entirely, or at least partially, during step d) of winding of the layer of fibres around the mandrel.

Advantageously, the heating of the cylindrical body being formed can be obtained, at least partially, through heating means arranged externally to the cylindrical body being formed.

Preferably, the heating of the cylindrical body being formed can be obtained, at least partially, through heating means arranged in the winding mandrel, in combination with the aforesaid external heating means.

The combination of external and internal heating allows better control of the thermal gradient inside the cylindrical body being formed. In particular, it can be designed to obtain the smallest possible thermal gradient inside the cylindrical body.

More generally, it is preferable to heat the cylindrical body being formed in the most homogeneous way possible throughout its thickness. In particular, one wants to avoid some sectors of the cylinder being subjected to more intense heat treatments than other sectors, with the risk of generating internal tensions during the formation of the body itself such as to damage or crack the body itself. To this end, during the heating step, one can monitor the trend of the thermal gradient, for example, by measuring over time, using suitable sensors, the temperatures on the inner and outer surface of the body being formed itself.

Preferably, in the case in which the resin binders are epoxy, during step e) of heating the cylindrical body, the temperature of the cylindrical body being formed is maintained between 120 °C and 250 °C. If one intends to obtain a complete cross-linking, the temperature must exceed 200 °C. If one does not intend to obtain a complete cross-linking, the temperature may remain below 200 °C.

Preferably, in the case in which the resin binders are phenolic, during step e) of heating the cylindrical body, the temperature of the cylindrical body being formed is maintained between 100 °C and 230 °C. If one intends to obtain a complete cross-linking, the temperature must exceed 180 °C. If one does not intend to obtain a complete cross-linking, the temperature may remain below 180 °C.

Advantageously, the method may include a step 1) of preheating the fibre layer. This preheating step 1) is conducted before step b) of impregnation with resins and thus before step d) of winding around the mandrel. Preferably, in this preheating step l), the fibres are heated to temperatures below the cross-linking point of the resin with which the fibre layer will subsequently be impregnated.

Advantageously, the method may comprise a step m) of preheating the resin that is to be applied to the fibre layer in impregnation step b) and, thus, before step d) of winding around the mandrel. In this preheating step m), the resin is heated to temperatures below the cross-linking point in order to reduce its viscosity and increase its homogeneity.

Preferably, the method comprises at least a step n) of consolidation of the fibre layer conducted after impregnation step b). This consolidation step n) is conducted by applying pressure to the layer of fibres already impregnated in order to make the resin penetrate the fibre layer itself. Preferably, this consolidation step n) is conducted by means of one or more pairs of opposed pressure rollers.

Advantageously, the method comprises at least a step o) of heating the resin-impregnated fibre layer. This step o) is conducted between impregnation step b) and winding step d). In this heating step o), the impregnated fibre layer is progressively heated either up to temperatures near, but lower than that of the cross-linking of the resin, or to the cross-linking temperature of the resin.

Advantageously, in impregnation step c), the resin binder can be applied to the fibre layer by deposition or immersion.

The method may comprise a post-cross-linking/post-curing heat treatment step g), once heating step e) is ended.

This step g) can be conducted on the semi-finished cylindrical body formed in such a way as to define, already in itself, a single disc-shaped body that defines at least the braking band of a disc brake.

Alternatively, this step g) can be conducted on the semi-finished cylinder body before cutting step f) or it can be conducted on at least a portion of the slices of the cylindrical body obtained as a result of cutting step f) .

According to a preferred form of implementation, the method comprises a step h) of forming the cylindrical body, in the case where the latter is formed so as to define, already in itself, a single disc-shaped body that defines at least the braking band of a disc brake, or of individual slices of the cylindrical body obtained as a result of cutting step f). Preferably, this forming step h) is conducted before post-cross-linking/post-curing heat treatment step g) and following a heating/curing step e) in which only a partial cross-linking of the resin is obtained in such a way that the cylindrical body and/or the slices obtained by cutting are still plastically deformable.

According to a particularly preferred and advantageous form of implementation, forming step h) is conducted on the cylindrical body (in the case where the latter is formed so as to define, already in itself, a single disc-shaped body that defines at least the braking band of a disc brake), or on the individual slices of the cylindrical body by plastically deforming in the axial direction a central portion of the cylindrical body or of the disc-shaped body defined by the individual slice to obtain on the cylindrical body or on the disc-shaped body itself, a coaxial cap, axially projecting from it. Advantageously, this coaxial cap can define the bell of the brake disc, the peripheral annular part of the cylindrical body or of the disc-shaped body not deformed defining the braking band of the brake disc.

Advantageously, the mandrel 10 can have an outer diameter D1 less than the inner diameter of the braking band of the brake disc to be obtained, in such a way that the cylindrical body or disc-shaped body defined by the individual slice extends radially inwardly beyond the annular portion destined to define the braking band of the brake disc to be obtained.

According to a particularly preferred or advantageous form of implementation, the method comprises a step i) of cutting out through-openings on the fibre layer. This cutting out step i) is conducted before step d) of winding of the layer around the mandrel.

Preferably, these through-openings are formed on the fibre layer 20 according to a distribution in rows. Each row of openings extends in the direction of the width of the layer. The openings of one row are aligned with the openings of the other rows in the direction of the length of the fibre layer.

Advantageously, the spacing between the rows of openings is regulated as a function of radial position that the single row must assume in the cylindrical body with respect to the other rows, so that during winding step d), the openings overlap radially so as to form radial cavities. By working on these parameters, one can create three-dimensional structures as you want. Each radial cavity can extend from the outer surface of the cylindrical body to a predefined radial depth. These radial cavities can define ventilation channels formed in the thickness of the braking band of the brake disc to be obtained.

Preferably, the size and shape of the openings of the individual rows are regulated as a function of the radial position that the individual row must assume in the cylindrical body with respect to the other rows, so as to regulate the internal section of each radial cavity as a function of the radial dimension.

Preferably, the aforesaid at least one fibre layer 20 consists of carbon fibres. However, even fibres made of other materials suitable for the purpose may be provided.

The fibre layer may consist of continuous fibres, chopped fibres or a mixture of chopped and continuous fibres.

In particular, the fibre layer comprises continuous fibres arranged in one or more predefined directions that, in particular, can be mutually intersecting.

In particular, the fibre layer may be constituted by a fabric of continuous fibres.

In particular, the fibre layer may be constituted by a non-woven fabric of chopped or continuous fibres.

Advantageously, the aforesaid at least one fibre layer 20 has a multi-layer structure. Preferably the layers of this multi-layer structure have fibre orientations and/or composition different from each other.

Preferably, the operating steps of the method are conducted continuously on the fibre layer that is progressively formed and continuously wound around the winding mandrel.

Advantageously, alternatively to the above, at least the braking band of a brake disc can be obtained by overlapping in the direction of the thickness s of said disc one or more of the disc-shaped bodies obtained by cutting the cylindrical body with one or more layers of fibres impregnated with at least one binder resin, so as to obtain a multi-layer disc-shaped assembly.

Preferably, the aforesaid multi-layer disc-shaped assembly is subjected to needling performed in a direction substantially orthogonal to the plane of the brake disc to join said one or more disc-shaped bodies and said layers of impregnated fibres to each other.

The semi-finished cylindrical body, the disc-shaped bodies obtained by cutting the cylindrical body or the disc-shaped multi-layer assembly can be subjected to at least one pyrolysis step and a subsequent densification step to obtain bodies in CC.

The semi-finished cylindrical body, the disc-shaped bodies obtained by cutting the cylindrical body or the disc-shaped multi-layer assembly can be subjected to at least one pyrolysis step and a subsequent silicon infiltration step to obtain bodies in CCM.

### Description of the drawings

Further characteristics and advantages of this invention will be more understandable from the following description of its preferred and non-limiting examples of embodiments, wherein:
- Figure 1a shows a block diagram of a general form of implementation of the method according to this invention;
- Figure 1b shows a block diagram of a preferred form of implementation of the method according to this invention;
- Figure 2 shows a block diagram of a preferred form of implementation of the method according to this invention;
- Figure 3 shows a simplified diagram of a plant for the implementation of a particular form of the method according to this invention in the case of treatment of continuous fibres and application of semi-fluid resins;
- Figure 4 shows a simplified diagram of a plant for the implementation of a particular form of the method according to this invention in the case of treatment of chopped fibres and application of semi-fluid resins;
- Figure 5 shows a simplified diagram of a plant for the implementation of a particular form of the method according to this invention in the case of application of liquid resins to the fibres;
- Figure 6 shows a simplified diagram of a portion of plant for the implementation of a particular form of the method according to this invention for the creation of radial ventilation channels in brake discs; and
- Figure 7 shows the steps of forming a disc obtained according to the method of this invention to obtain the bell of the disc in one piece with the braking band.
- Figures 8a, 8b and 8c show the steps of making a brake disc constituted by a multi-layer disc-shaped assembly, comprising disc-shaped bodies obtained according to the invention;
- Figure 9 schematically shows the structure in cross-section of a multi-layer disc-shaped assembly obtained according to the steps illustrated in Figures 8a to 8c;
- Figure 10 shows a plan section of the assembly illustrated in Figure 9 according to the section plane X-X indicated therein;
- Figure 11 shows a plan section of the assembly illustrated in Figure 9 according to the section plane XI-XI indicated therein; and
- Figure 12 shows a block diagram of an alternative form of implementation of the method according to this invention.

### Detailed description

With reference to the above figures, number 1 globally indicates a brake disc made of fibre-reinforced material obtained with the method according to this invention.

The brake disc comprises an annular structure, or braking band, and a central fastening element, known as a bell, through which the disc is fixed to the rotating part of a vehicle suspension, for example a hub. The braking band has a predefined thickness s (dimension defined in axial direction) and is provided with opposed braking surfaces suitable to cooperate with friction elements (brake pads), housed in at least one calliper body placed astride such braking band and integral with a non-rotating component of the vehicle suspension. The controlled interaction between the opposite brake pads and the opposed braking surfaces of the braking band determining a braking action by friction that allows the deceleration or stopping of the vehicle.

A disc brake obtainable with the method according to this invention has at least the braking band made of a fibre-reinforced material, which can be of the CC or CCM families. This material has a support matrix that acts as a binder for the fibres. The matrix cooperates with the fibres in the transfer of stresses applied to the material and protects the fibres from damage. The matrix is generally produced by subjecting organic resins to suitable heat treatments (such as heating and pyrolysis or carbonisation). Preferably, there are additives in the matrix that, like the binder resins used, vary depending on the type of material to be obtained and/or the final characteristics of the material itself. The aforesaid heat modify the resins and additives.

Alternatively, the brake disc can be obtained by directly subjecting a body consisting only of fibres to carbonisation or pyrolysis and subsequent specific treatments (of densification for CC or infiltration for CCM). In this case, the matrix is defined by at least a portion of the fibres after the carbonisation or pyrolysis.

As will be clarified in the following description, the method according to this invention allows, in particular, adjusting the orientation of the fibres in the matrix. For example, the method according to the invention allows arranging the fibres circumferentially in the braking band. However, more complex orientations of the fibres can also be obtained. The method likewise allows also a random arrangement of the fibres in the matrix.

The method according to this invention allows obtaining coherent and solid disc-shaped bodies thanks to a particular distribution of at least a portion of the fibres, which allows connecting the coil-shaped structures that form the disc-shaped bodies to each other on the plane of the disc.

As will be clarified in the following description, the method according to this invention allows, in particular, adjusting the composition of the material that forms the disc (in terms of both fibres and matrix).

As will be taken up again in the continuation of the description, the method according to this invention can provide that the braking band is realised separately from the bell and that the two components are associated in a final assembly step of the brake disc. In particular, the two components - band and bell - can be made of different materials: the band made of fibre-reinforced material, CC or CCM, and the bell, for example, of metal. Advantageously, the method according to this invention can provide, alternatively, that the bell be made in one piece with the braking band, and is thus also made of the same fibre-reinforced material, CC or CCM, of which the braking band is made.

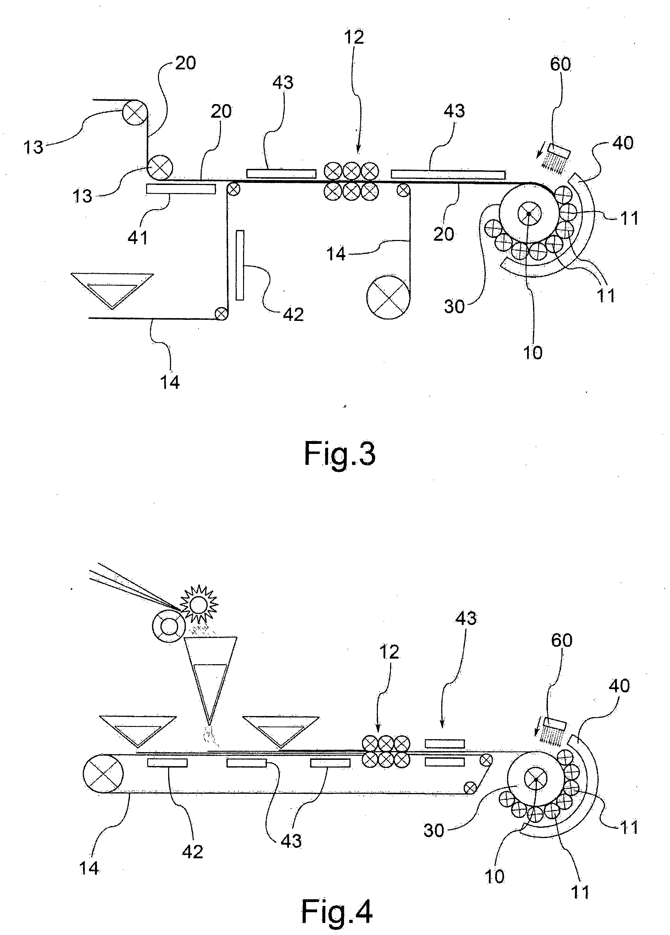

The method according to the invention will be described referring to elements/devices that will be then be taken up again in the description of some examples of a plant for the implementation of the method, illustrated in Figures 3 to 7. So, for simplicity of exposition, the same reference numbers will be used.

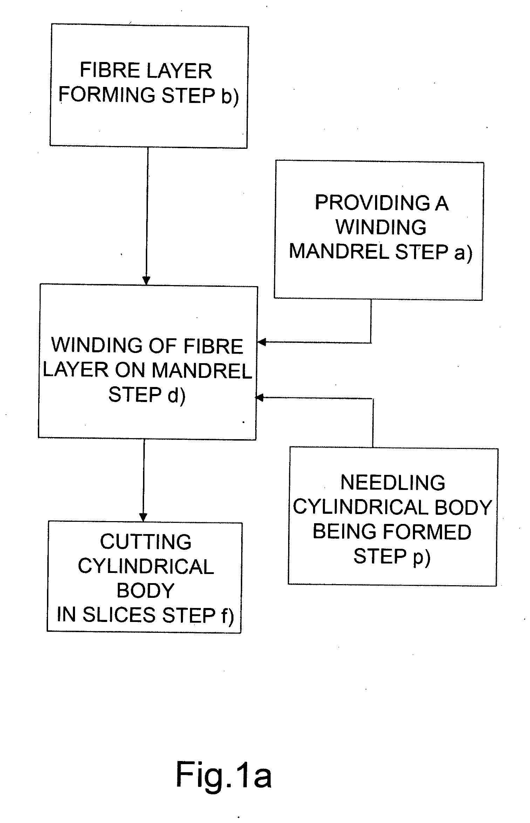

According to a general form of implementation of this invention, illustrated in Figure 1a, the method for making brake discs in fibre-reinforced material comprises the following operating steps:
a) providing a winding mandrel 10, having a predefined outer diameter D1;
b) forming at least one layer of fibres 20 having a predefined width W;
d) winding the fibre layer around the mandrel 10 to form a coaxially hollow cylindrical body 30, having a predefined outer diameter De and an inner diameter Di substantially equivalent to the diameter D1 of the mandrel 10; the fibre layer is wound around the mandrel according to at least one winding direction substantially parallel to the direction of the length L of the layer 20.

According to the invention, the method comprises a step p) of needling the cylindrical body being formed at least according to a substantially radial direction so as to orient at least a portion of the fibres of the fibre layer 20 according to this direction by arranging such fibres in connection between two or more adjacent coils of the fibre layer wound around the mandrel.

"Needling" generally means a process with which, by means of the vertical movement of needles, compactness is conferred on a fibre layer. The effect is to obtain a "non-woven fabric" with a certain consistency due to the penetration of a portion of the fibres dragged vertically by the motion of the needles.

The expression "substantially radial" is intended to generically include a direction parallel to a plane incident the axis of rotation of the mandrel. In particular, this direction is radial with respect to the axis of rotation of the mandrel.

Needling allows obtaining particularly coherent disc-shaped bodies, in which the coil-shaped structures created by the winding of the fibre layer around the mandrel are connected to each other by at least a portion of the fibres present in the layer itself. In fact, these fibres must be arranged between one coil and another, constituting connection bridges. Regardless of the winding direction of the fibre layer, which as will be clarified in the following description can be varied, needling allows connecting the coils with each other.

From a purely operational standpoint, needling also allows consolidating the cylindrical body being formed, immediately making adjacent coils integral with other. This increases the dimensional stability of the cylindrical body and simplifies its subsequent manipulation.

Preferably, the needling is carried out substantially at the winding area of the fibre layer around the cylindrical body being formed.

"Winding area of the fibre layer" means the area in which the fibre layer begins to be wound around the mandrel in direct contact with the mandrel itself or the area in which each portion of the fibre layer begins winding around the cylindrical body being formed and, thus, starts becoming part of the cylindrical body itself. This position is identified in the plant diagrams of Figures 3, 4 and 5, where, in correspondence of the aforesaid winding area, a needling machine identified by the number 60 is schematically represented.

Advantageously the needling is performed at a predefined radial depth, depending on the number of coils to be involved, starting from the surface of the cylindrical body being formed. Preferably, the needling is conducted to a depth sufficient to connect the surface coil at least at the underlying coil.

According to a particular form of implementation of this invention, the cylindrical body can be dimensioned so as to define, already in itself, a single disc-shaped body that defines at least the braking band of a disc brake.

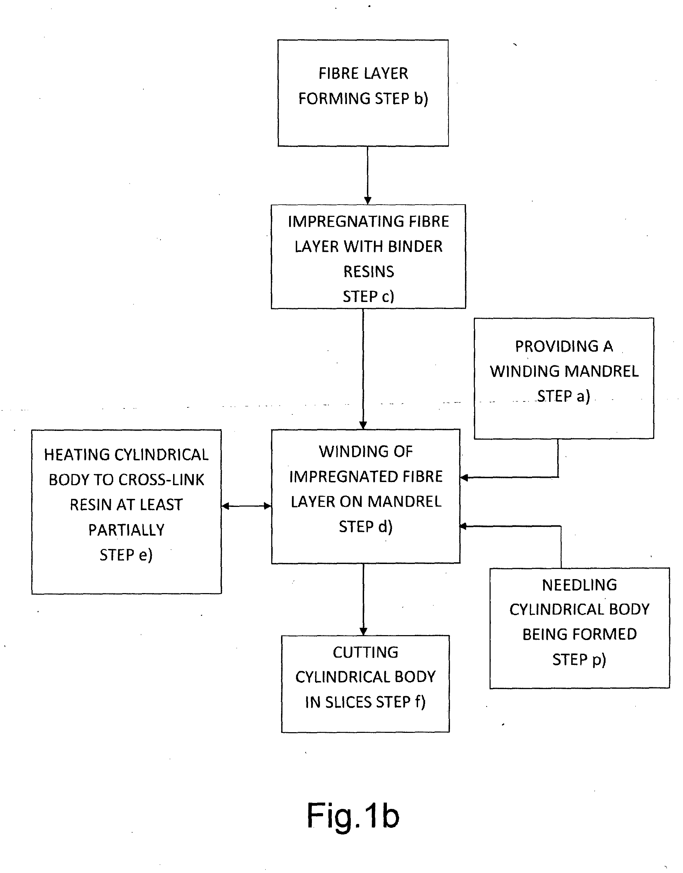

According to a preferred form of implementation of this invention, illustrated, in particular, in the block diagram of Figure 1, the method comprises a step f) of cutting the semi-finished cylindrical body in slices transversely to the longitudinal axis of the cylindrical body itself according to the predefined thicknesses s1. Each slice thus obtained is an axially hollow disc-shaped body.

The individual axially hollow disc-shaped body obtained by cutting the cylindrical body can have the thickness s of the brake disc to be made and can, thus, already in itself, define at least the braking band of the disc itself. Thanks to this form of implementation of the method, it is possible to obtain from a single semi-finished body (green body) a plurality of disc-shaped bodies 31, each of which is then workable to obtain at least the braking band of a brake disc 1. The number of disc-shaped bodies obtainable from a single cylindrical body 30 depends on the length of the cylindrical body and the thicknesses s1 of the disc-shaped bodies to be obtained.

Alternatively, each slice obtained by cutting the cylindrical body may have a thickness less than the thickness s of the brake disc to be made and may therefore constitute only an annular portion of the thickness of the braking band of a disc brake.

Advantageously, a brake disc - or at least its braking band - can be made by overlaying two or more slices obtained by cutting different cylindrical bodies. This makes it possible to easily obtain multi-layer discs in the direction orthogonal to the plane of the disc.

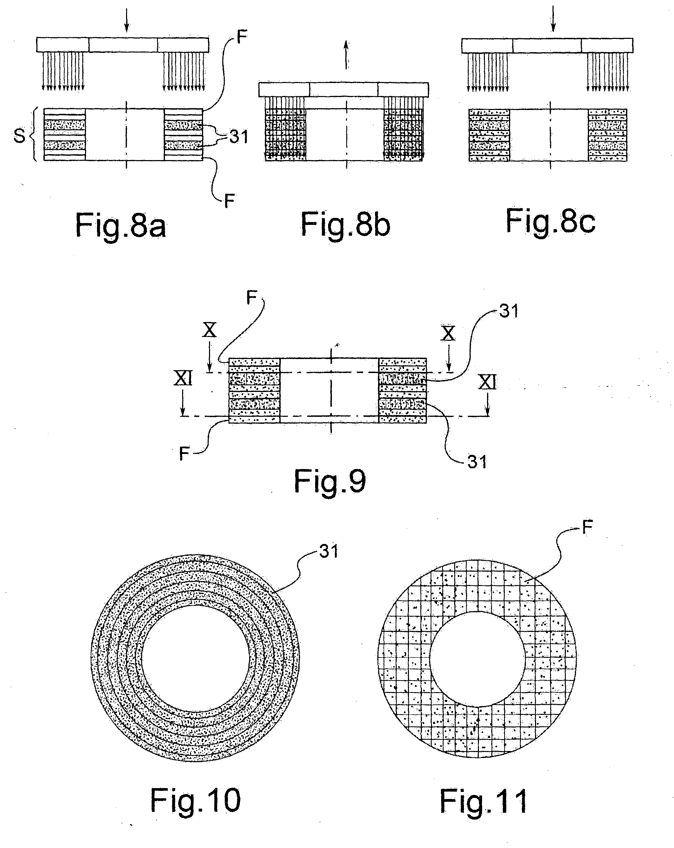

Alternatively, as illustrated in Figures 8a, 8b and 8c, at least the braking band of a brake disc can be obtained by overlapping - in the direction of the thickness s of the disc itself - one or more of the disc-shaped bodies 31 obtained by cutting the cylindrical body with one or more fibre layers F impregnated with at least one binder resin, so as to obtain a multi-layer disc-shaped assembly 34.

In particular, the fibre layers F mentioned above may be constituted by fibre layers obtained in different ways from this method, for example, constituted by fibre cloths conventionally used to make brake discs as an alternative to the method of winding fibres on a mandrel. In this case, the disc-shaped bodies 31 according to this invention can be used as reinforcing elements or, in general, to modify the mechanical and thermal properties of discs obtained according to conventional techniques.

Preferably, as illustrated in Figure 9, the multi-layer disc-shaped assembly is obtained by alternately overlapping disc-shaped bodies according to the invention and layers of conventional fibres. In particular, the layers of conventional fibres can be constituted by pieces of fibrous elements partially overlapped with each other, constituted for example by pieces of rectangular or square shape or disc-shaped sector.

Preferably, as illustrated in Figures 8a to 8c, the aforesaid multi-layer disc-shaped assembly is subjected to needling performed in a direction substantially orthogonal to the plane of the brake disc to join said one or more disc-shaped bodies and said impregnated fibre layers to each other.

Advantageously, regardless of the thickness of the disc-shaped body, and thus of the fact that it constitutes a part or the whole of the braking band of a disc brake, the needling conducted in a substantially radial direction on the cylindrical body being formed allows arranging part of the fibres of each coil in this direction, bringing about greater solidarization between the coils on the plane of the disc. The disc-shaped body that is obtained thus presents improved mechanical and thermal properties.

The method according to the invention allows greatly simplifying the production process of brake discs made of fibre-reinforced material.

There are many advantages in terms of operational simplification. It is no longer necessary to control n distinct processes for making the green body, but only one. In fact, the semi-finished disc-shaped bodies (green bodies) that constitute the starting point for the construction of the brake discs no longer need to be made one by one for each individual disc, with n steps of moulding and cross-linking of the resin.

The advantage is not only in terms of reduced operational steps, but also in terms of simplifying the quality control of the products obtained. In fact, the production of the disc-shaped bodies in batches, rather than individual pieces, reduces the operations related to quality control. Moreover, one has a production with more homogeneous characteristics, both in terms of distribution of the fibres in the matrix and in terms of the degree of cross-linking of the binder resin. There are clear benefits in terms of reproducibility of results.

Preferably, the mandrel 10 has a predefined length L1, not less than the width W of the fibre layer. This technique is useful for avoiding the risk that, at one or both ends, the cylindrical body being formed is not supported by the mandrel and may collapse or deform, with waste of material and increased costs.

According to a preferred form of implementation of the invention, the fibre layer 20 comprises at least one binder resin, destined to define the support matrix of the fibres themselves.

Advantageously, as illustrated in Figure 1b, the method can thus include a step c) of impregnating the fibre layer (20) with at least one binder resin prior to step d) of winding around the mandrel.

Alternatively, the fibre layer could be obtained directly by extrusion and subsequent drawing of a mixture comprising plasticising components and fibres.

Preferably, as will be taken up again in detail in the continuation of the description, the method comprises a step e) of heating the coaxially hollow cylindrical body at temperatures and for a period of time such as to at least partially cross-link the binder resin so as to obtain a solid, semi-finished cylindrical body.

Preferably, the method may also comprise a post-cross-linking (post-curing) heat treatment step g), aimed at completing or consolidating the cross-linking of the resin begun in heating step e). This step g) is thus conducted subsequently to the step e) of heating the cylindrical body.

According to particular forms of implementation, after step e) of heating the cylindrical body, post-cross-linking step g) may not be required in the case in where the solid semi-finished cylindrical body obtained already has a mechanical strength and rigidity such as to make manipulatable without being subject to deformation. In particular a cylindrical body made of CC and subjected to needling has characteristics of flexibility.

Preferably, as illustrated in Figures 3, 4 and 5, the needling required in step p) of the method is performed at a surface coil of the fibre layer not yet subjected to the heating performed in step e). Operationally, it is preferable to needle portions of the fibre layer not yet or at least only partly involved in the partial cross-linking of the resin induced by the heating provided in step e) of the method.

Preferably, post-curing step g) is conducted in an oven, with temperatures of up to 150-250 °C and times ranging from 2 to 6 hours and, in any case, for about 150 s for each centimetre of thickness of the article to treated.

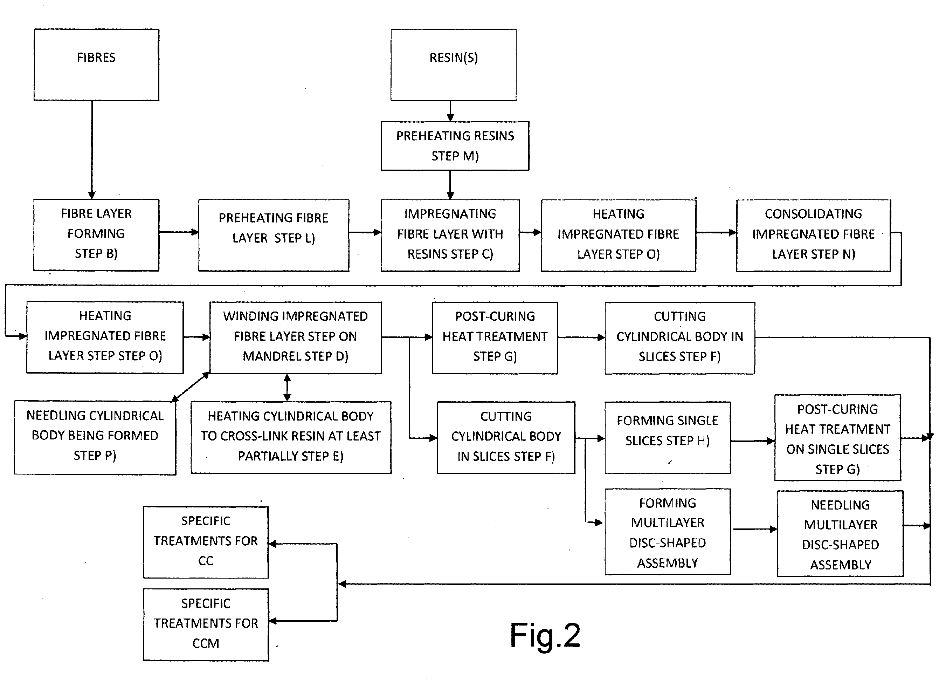

As illustrated in the block diagram of Figure 2, post-cross-linking (post-curing) heat treatment step g) can be conducted directly on the semi-finished cylindrical body before cutting step f) or it can be conducted on at least a portion of the slices obtained from cutting the semi-finished cylindrical body 30, i.e., after cutting step f).

Alternatively, post-cross-linking (post-curing) heat treatment step g) can be conducted directly on the semi-finished cylindrical body 30 in the case where the cylindrical body is dimensioned so as to define, already in itself, a single disc-shaped body that defines at least the braking band of a disc brake.

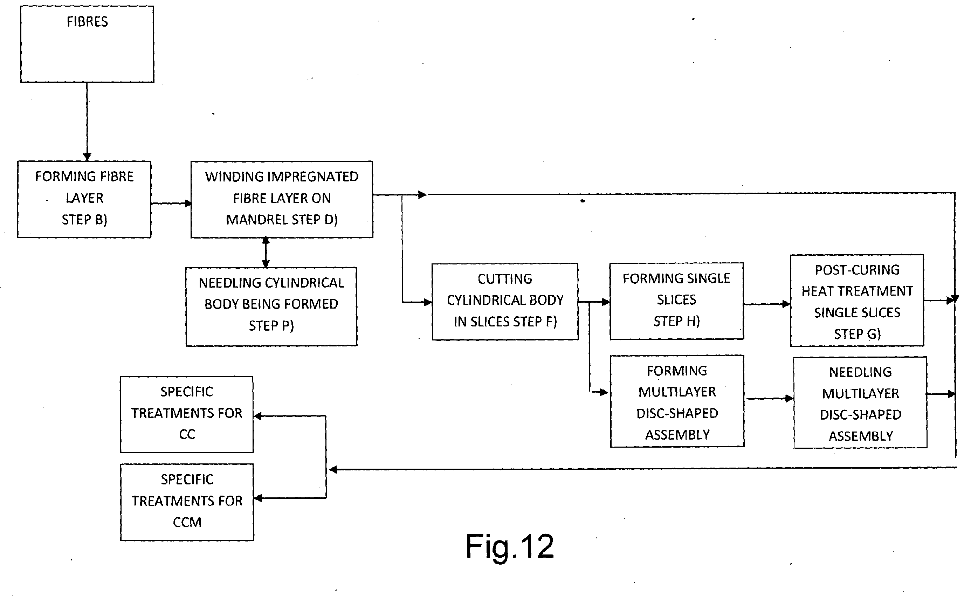

According to an alternative form implementation of the invention, illustrated schematically in Figure 12, the fibre layer 20 may be wound around the mandrel without comprising any binder resin, but be composed solely of fibres. It remains understood, that according to the invention and as already described, the fibre layer is subject to needling. As already mentioned above, the cylindrical body thus obtained or the disc-shaped bodies obtained from it are subjected to carbonisation or pyrolysis and then to specific treatments as a function of the type of final material, CC or CCM, to be obtained. In this case, before carbonisation or pyrolysis, the cylindrical body or the individual disc-shaped bodies may be subjected to a preliminary step of pressing and/or needling orthogonally to the base of the cylinder or the plane of the discs, in the case where it is necessary to increase the density of the body.

As illustrated in the block diagram of Figure 2, the disc-shaped bodies obtained by cutting slices of the cylindrical body or multi-layer disc-shaped assembly (comprising one or more of such disc-shaped bodies) are then subjected to specific treatments, depending on whether the braking band of the brake disc 1 to be obtained must be made of CC or in fibre-reinforced CCM. In particular, in the case in which the braking band is to be made of CC, the individual disc-shaped bodies or the multi-layer disc-shaped assembly will be subjected to at least one step of pyrolysis/carbonisation and at least one subsequent step of densification. In the case in which the braking band is to be made of CCM, the individual disc-shaped bodies or the multi-layer disc-shaped assembly will be subjected to at least one step of pyrolysis/carbonisation (and any CVI or LPI densifications) and at least one subsequent step of silicon infiltration. It will be not provided a more detailed description of these specific steps since they can be carried out with techniques and methods known to a person skilled in the art.

The aforesaid specific heat treatments, which vary depending on whether the braking band is to be made of fibre-reinforced CC or CCM, can also be conducted directly on the cylindrical body, in case where the latter is dimensioned so as to define, already in itself, a single disc-shaped body that defines at least the braking band of a disc brake.

What follows in this description can be applied both in the case where the discs are obtained by cutting the cylindrical body or, where appropriate, by formation of a multi-layer disc-shaped assembly (comprising one or more of such bodies), and in the case where the cylindrical body defines, in itself, a single disc and no cutting step is required.

According to a particular form of implementation of this method, in the case where the fibre layer 20 includes at least one binder resin, post-cross-linking step g) can be conveniently absorbed in the pyrolysis/carbonisation step (conducted, for example, in a continuous oven) provided both in the case of discs in CC and in the case of discs in CCM.

Advantageously, in addition to binder resins, additives can be applied to the fibre layer 20. Such additives can be applied to the fibre layer separately from the resins, for example in the form of separate deposition layers, or they can be applied to fibre layer mixed with the resins themselves. As already mentioned above, the binder resins and any additives are selected depending on the type of material (CC or CCM) to be obtained.

Advantageously, in the presence or absence of binder resins in the fibre layer, during winding step d), a single fibre layer 20 can be wound around the mandrel or several fibre layers 20 can be wound around that mandrel that, preferably, but not necessarily, they differ from each other in terms of the orientation of the fibres and/or composition of the resins and/or the fibres.

The winding of several layers around the mandrel can take place:
- simultaneously on different longitudinal positions of the mandrel, obtaining in this case a differentiation of the characteristics of the cylinder along the axis of the mandrel and thus in the thickness of the discs; or
- in sequence, with the layers wound one after another around the mandrel, obtaining in this case a differentiation of the characteristics of the cylinder, and thus of the discs in the radial direction.

One may provide combinations of the aforesaid two modes of winding of a plurality of distinct layers.

The single fibre layer 20 (both in the case of winding a single layer or several distinct layers) may comprise reinforcing fibres of any composition suitable for the purpose. Mixtures of different fibres can be provided. Preferably, the fibres used are carbon.

Even the dimensions of the fibres - in terms of diameter and cutting - are chosen as a function of the characteristics to be conferred to the brake disc 1.

The single fibre layer may consist of continuous fibres, chopped fibres or a mixture of chopped and continuous fibres.

In particular, the fibre layer comprises continuous fibres arranged in one or more predefined directions that, in particular, can be mutually intersecting.

The fibres can be arranged in the layer 20 unidirectionally or according to several directions. A multi-directional arrangement of the fibres can be obtained by weaving the fibres (for example with a warp and weft structure) or by superimposition of several layers having different orientations of the fibres (as will be taken up again later).

In particular, the fibre layer may be constituted by a fabric of continuous fibres.

Alternatively, the fibre layer may be constituted by a non-woven fabric of chopped or continuous fibres.

The fibre layer can also be made with a completely random distribution of the fibres.

As will be taken up again later, the single layer may have the fibres arranged in any orderly way in some portions and in a random way in other portions.

As will be taken up again in the description, the fibre layer 20 may be formed in different ways, also as a function of the characteristics of the fibres used.

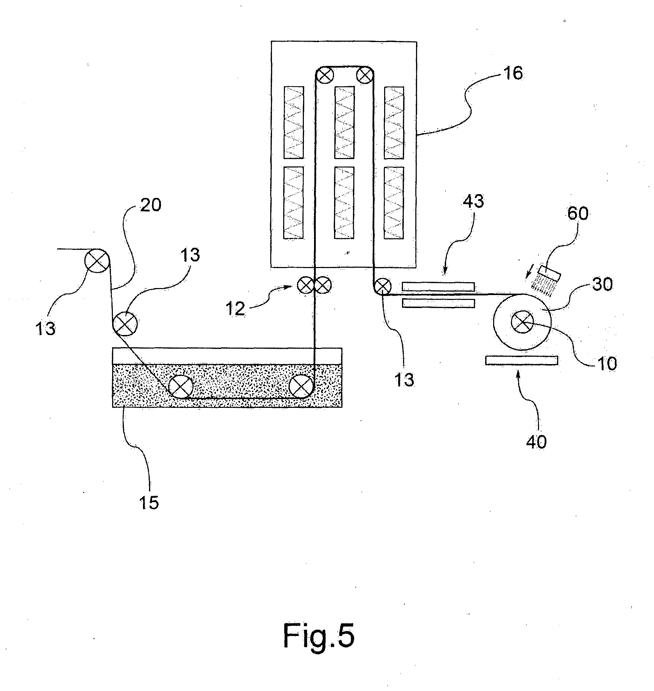

As illustrated for example in the diagrams of Figures 3 and 5, the fibre layer 20 may be formed from coils of continuous fibres. This technique can also be used also in the case where a step of impregnating the fibre layer with resins is not provided.

As illustrated for example in the diagram of Figure 4, the fibre layer 20 may be formed from chopped fibres. In this case the chopped fibres are deposited on a transport film, forming a mat of randomly arranged fibres. This technique can also be used also in the case where a step of impregnating the fibre layer with resins is not provided.

Advantageously, the chopped fibres deposited on the transport film can be oriented by means of suitable orientation devices that can made on the same transport film (for example by ribs), or that can be external to the film, such as for example combs.

According to forms of implementations of the method not illustrated in the accompanying figures, in the case where the layer has portions with fibres arranged in an orderly manner and portions with fibres arranged in a disorderly manner, the two production modes (with continuous fibres and chopped fibres) can be combined with each other.

Preferably, as will be taken up again below, step b) of forming the fibre layer 20 occurs continuously, regardless of the presence or absence of a step of impregnation with resins. The layer formed is then progressively and continuously wound on the mandrel. The step of forming the layer can thus be conducted in line with the other steps of the method. This gives greater operational flexibility to the method according to the invention.

Alternatively, the fibre layer can be realised separately from the other steps of the method. The fibre layer may be stored, for example, in the form of coils and be then fed to the production process of winding around the mandrel.

Advantageously, the properties of the fibre layer are chosen as a function of the characteristics to be conferred to the cylindrical body and thus to the disc-shaped bodies that can be made from it.

The fibre layer can have an orientation of fibres differentiated along its development, in particular along the direction of longitudinal development. In this way, by appropriately selecting the characteristics of the layer in terms of orientation of the fibres, it is possible to differentiate the characteristics of the cylindrical body, in particular in the radial direction.

For example, it is possible to form the fibre layer 20 in such a way that the portions of the layer that will form sectors of the single disc (defined by the cylindrical body taken in its entirety) or of the discs (obtained from the cylinder by cutting) subject to greater load and physical stress have fibres arranged according to one or more predefined orientations, while the other portions of the layer that will form sectors less subject to load and physical stress have fibres arranged randomly.

Advantageously, in combination or alternatively to a differentiation in the orientation of the fibres, the fibre layer can have a composition differentiated in terms of fibres and/or binders resins and/or additives, along its development, in particular along the direction of longitudinal development and/or along the direction of development in width. In this way, by appropriately selecting the characteristics of the layer in terms of composition, it is possible to differentiate the characteristics of the cylindrical body, in particular in the radial direction and in the direction of the winding axis (i.e., in particular in the thickness of the individual disc or the final discs).

In particular, if the fibre layer 20 has a composition differentiated along the direction of longitudinal development, a single disc-shaped body or several disc-shaped bodies with a composition differentiated in the radial direction are obtained. For example, it is possible to obtain discs in which the innermost sectors of the cylindrical body (and thus of the disc-shaped bodies) are made with fibres of a first material, while the outermost sectors (for example those which form the braking band of the disc) are made with fibres in a second material.

In particular, if the fibre layer 20 has a composition differentiated along the direction of development in width, one obtains a single disc-shaped body or several disc-shaped bodies with a composition differentiated in the direction of the thickness (which coincides with the axis of development). For example, it is possible to obtain discs formed from layers of different composition. In this way, it is possible for example to realise - in the single disc-shaped body (defined by the cylindrical body in its entirety) or in the disc-shaped bodies obtained by cutting the cylinder - surface layers of different composition with respect to the more internal layers. This is particularly useful in particular in the braking bands where specific surface friction layers can be required.

Advantageously, the fibre layer 20 may be monolayer or multi-layer, so as to obtain sandwich structures.

Preferably the layers of this multi-layer structure have fibre orientations and/or fibre composition different from each other.

Advantageously, in the case where the fibre layer has a multi-layer structure, a specific forming line could be provided for each individual layer. The different forming lines, working in parallel, will channel their products on a single multi-layer assembly line. The multi-layer structure thus produced will then be sent to the winding step.

Advantageously, the differentiation of the characteristics of fibre orientation and/or composition of the material (fibres, resins and/or additives) may be obtained either by winding around the mandrel a single continuous layer of fibres with characteristics that are differentiated along its development (for example in length and/or width) or (as already mentioned) by winding in sequence distinct fibre layers that differ in their fibre orientation and/or composition. In this latter case, the order of winding the different fibre layers depends on the characteristics to be conferred to the single disc (defined by the cylindrical body in its entirety) or to the final discs (obtained by cutting from the cylindrical body).

The characteristics of the fibre layer 20 may be changed as a function of the formation step of the cylindrical body in the process of winding around the mandrel. One can, for example, vary the characteristics of the fibre layer 20 - in terms of orientation of the fibres and/or of composition - in such a way that the cylindrical body presents different characteristics, for example, in the radial direction.

Advantageously, changes of orientation of the fibres in the cylindrical body being formed may be obtained during winding step d) by varying the winding direction of the fibre layer around the mandrel. The change in the winding direction can be performed both by maintaining constant the characteristics of the fibre layer and by simultaneously changing the characteristics of the layer itself.

Operationally, the winding direction of the fibre layer can be varied by changing the relative position between the mandrel and the fibre layer.

Therefore, the method according to this invention provides high flexibility in terms of the ability to control and adjust the orientation and/or composition of the fibres inside the cylindrical body, and thus inside the individual disc-shaped body (defined by the cylindrical body in the its entirety) or of the disc-shaped bodies (obtained by cutting the cylindrical body) that form at least the braking bands of the brake discs or a portion of them.

Advantageously, step c) of impregnating the fibre layer 20 with resin can be performed using any technique suitable for the purpose. In particular, the binder resin can be applied to the fibre layer by direct deposition on the layer or by immersing the fibre layer in a resin bath. As illustrated in the diagram of Figure 4, the association between fibre layer and resin can be obtained by depositing the fibres on a resin layer realised, for example, on a transport film. This technique is preferably adopted if the fibre layer is produced continuously from chopped fibres. However, it can also be adopted in the case where the layer is produced from continuous fibres.

Any resin suitable for the purpose can be used as the binder resin. One can use only one type of resin or even mixtures of different resins.

In general, any organic resin with high carbon yield can be used. Preferably, phenolic or epoxy resins are used. In the case of CCM, even pre-ceramic resins, such as siloxanes or silanes, can be used.

As already mentioned above, additives of various types can be added to the binder resin, such as coke, graphite and carbon fibres.

The impregnation of the single fibre layer can be conducted in a differentiated manner so as to vary the composition of the resins and/or the additives applied from portion to portion of the same layer.

As already mentioned above, the fibre layer can be obtained directly by extrusion and subsequent drawing of a mixture comprising plasticising components and fibres.

The plasticising components may be any so long as they are decomposable in carbon in a step of carbonisation or pyrolysis and do not generate substances that may inhibit a possible subsequent infiltration with silicon. In particular, these plasticising components are substances that do not exhibit a wettability with silicon liquid equivalent to that of carbon. For example, methylcellulose or hydroxyethyl cellulose (Natrosol) can be used as plasticising components.

Below are three examples of compositions of the above drawable mixture. All examples refer to mixtures containing fibres.
Example 1: mixture for making discs in Silicon Carbide: SiC FEPA 1000, 35% by weight on the solid; SiC FEPA 280, 52% by weight on the solid; phenolic resin, 8% by weight on the solid; methylcellulose, 5% by weight on the solid. This mixture should be kneaded in water, for a water content of 45% by weight on the total.
Example 2: mixture for making discs in CCM: Graphite KS75, 82% by weight on the solid; phenolic resin, 13% by weight on the solid; methylcellulose, 5% by weight on the solid. This mixture should be kneaded in water, for a water content of 46% by weight on the total.
Example 3: mixture for making discs in CCM: Fibre C Zoltec, 40% by weight on the solid; ground fibre, 5% by weight on the solid; SiC FEPA 1000, 20% by weight on the solid; Graphite KS75, 10% by weight on the solid; phenolic resin, 20% by weight on the solid; Natrosol, 5% by weight on the solid. This mixture should be kneaded in water, for a water content of 40% by weight on the total.

The drawing can be conducted cold or by chilling the mixture. Alternatively, the drawing may be conducted by heating the mixture so that the binder resin begins to cross-link.

Preferably, during winding step d), a predefined pressure is applied to the fibre layer being wound to make the portion of the fibre layer being wound adhere to the cylindrical body being formed. The value of the applied pressure varies depending on the characteristics to be conferred to the brake disc 1. In particular, depending on whether you want to make the coils of the layer being wound adhere to each other more or less, one will increase or decrease the value of the applied pressure. Jointly or alternatively to adjusting the applied pressure, it is possible to change the degree of adhesion of the coils to each other by adjusting the intensity of needling, by changing the frequency of needling and/or the density of the needles.

The pressure can be applied to the fibre layer by means of tensioning the fibre layer and/or by means of pressure rollers 11 disposed near the mandrel 10 (as illustrated in Figures 3 and 4). Preferably, the pressure rollers 11 are disposed downstream of the needling zone with respect to the winding direction of the fibre layer around the mandrel, and thus in particular downstream from the needling machine 60.

Preferably, in the case where the fibre layer comprises binder resin, the value of the applied pressure is chosen depending on the type of resin used and the process temperature. In the case where the binder resins are epoxy, the pressure is preferably between 1 and 10 bar. In the case where the binder resins are phenolic, the pressure is preferably between 1 and 5 bar. These values are chosen to achieve a good penetration of the resin inside the fibre layer and a good adhesion between the various winding layers, so as to obtain a compact and well-formed body of solid material.

As already said above, step e) of heating the cylindrical body is conducted at temperatures and for a period of time such as to at least partially cross-link the binder resin so as to obtain a semi-finished cylindrical body. The at least partial cross-linking of the resin must be such as to confer to the cylindrical body characteristics of mechanical strength such as to make it easy to manipulate and workable. In particular, the cylindrical body must be compact, in order to avoid it coming apart when handled, or when subjected to subsequent processing. For example, the body must be able to be cut into slices without losing its shape.

Preferably this step e) of heating the cylindrical body is conducted entirely, or at least partially, during step d) of winding the fibre layer around the mandrel. This allows, on the one hand, optimising the times of thermal treatment, which can already be started during the forming step of the cylindrical body and, on the other, improving the forming process of the cylindrical body. In fact, the cross-linking (even if partial) of the resin is induced immediately as the cylindrical body is formed, operating coil by coil and not on the final cylindrical body already formed. The body that is gradually forming is then consolidated simultaneously. The consolidation determined by heating the body is added to the consolidation action of the needling. This leads to substantial benefits in terms of improving the properties of mechanical strength and homogeneity of the body obtained.

Moreover, the thermal cross-linking treatment can be conducted almost independently of the sizes of the cylindrical body, since it is carried out on the coil surface of the body being formed and not on the final body. So, delays associated with temperature gradients between the outside and inside of the body are reduced.

Preferably, the heating of the cylindrical body being formed is conducted so as to obtain inside the cylindrical body being formed, the smallest possible thermal gradient within the body itself, preferably null. In other words, one works in such a way as to obtain the most homogeneous possible heating of the cylindrical body.

Advantageously, the heating of the cylindrical body can be obtained, at least partially, through heating means 40 arranged externally to the cylindrical body being formed. Such heating means may be of any type suitable for the purpose, such as of the resistive type, by means of IR and/or UV lamps, ion bombardment, etc.

Preferably, the heating of the cylindrical body being formed can be obtained, at least partially, also through heating means arranged in the winding mandrel 10, in order to also heat the inside of the cylindrical body being formed, in combination with the aforesaid external heating means. The combination of external and internal heating has the purpose of obtaining the smallest possible thermal gradient inside the cylindrical body being formed.

The heating from the inside - which is preferably conducted in combination with heating from the outside - allows in particular keeping warm the innermost layers of the cylinder (i.e., those closest to the mandrel), facilitating the consolidation of the body.

More generally, it is preferable to heat the cylindrical body being formed in the most homogeneous way possible throughout its radial thickness. In particular, one wants to avoid some sectors of the cylinder being subjected to more intense heat treatments than other sectors, with the risk of generating internal tensions during the formation of the body itself such as to damage or crack the body itself. To this end, during the heating step, one can monitor the trend of the thermal gradient, for example, by measuring over time, using suitable sensors, the temperatures on the inner and outer surface of the body being formed itself.

In the case in which the resin binders that impregnate the fibre layer are epoxy, during step e) of heating the cylindrical body, the temperature of the cylindrical body being formed is maintained between 120 °C and 250 °C. If one intends to obtain a complete cross-linking, the temperature must exceed 200 °C. If one does not intend to obtain a complete cross-linking, the temperature may remain below 200 °C.

In the case in which the resin binders that impregnate the fibre layer are phenolic, the temperature of the cylindrical body being formed is maintained between 100 °C and 230 °C. The degree of cross-linking is regulated as a function of the duration of the heat treatment. If one intends to obtain a complete cross-linking, the temperature must exceed 180 °C. If one does not intend to obtain a complete cross-linking, the temperature may remain below 180 °C.

Advantageously, the heating of the cylindrical body being formed can be also conducted in a differentiated manner as a function of the area of the cylinder being formed. As will be taken up again below, the composition and the internal structure of the cylinder can vary radially in order to impart different properties to different zones of the cylinder. For example, it is possible to differentiate the composition and structure between the braking surface and area of attachment of the bell. The differentiated heating as a function of the zone of the cylinder being formed can, therefore, be exploited to adapt to production needs linked to differences of composition of the fibres.

According to a particularly preferred form of implementation of the invention, regardless of whether or not the fibre layer includes a binder resin, the method comprises a step i) of cutting out through-openings 50 on the fibre layer 20. This cutting out step i) is conducted before step d) of winding of the fibre layer around the mandrel 10.

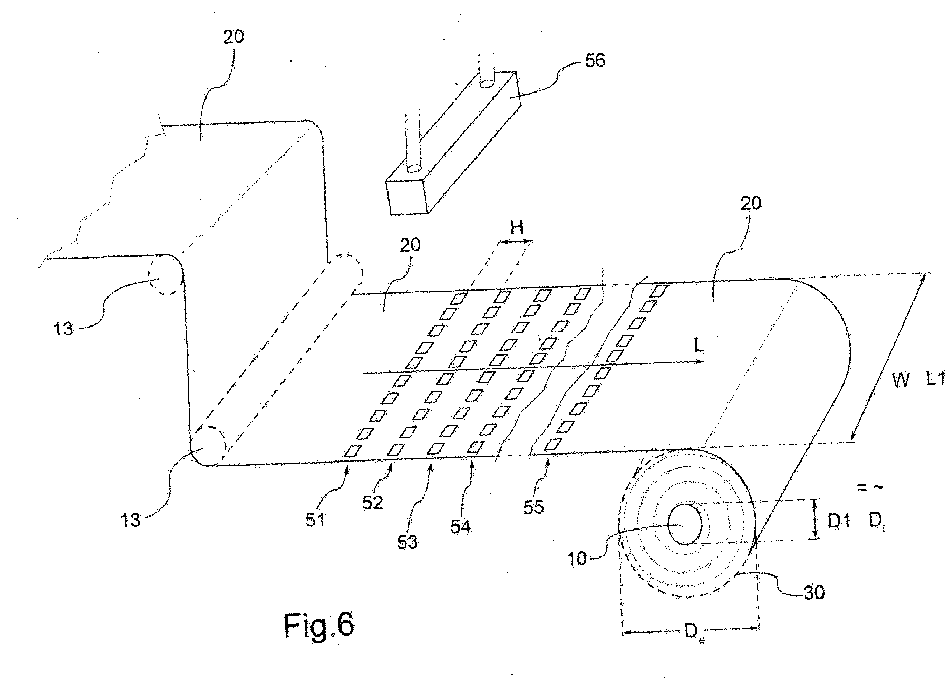

Preferably, as illustrated in Figure 6, the aforesaid through-openings 50 are formed on the fibre layer 20 according to a distribution in rows. Each row of openings 51-55 extends in the direction of the width W of the layer 20. The openings 50 of one row are formed so that they are aligned with the openings of the other rows in the direction of the length L of the fibre layer 20.

Advantageously, from an operational point of view, the spacing H between the rows of openings 51-55 is regulated as a function of radial position that the single row must assume in the cylindrical body with respect to the other rows, so that during winding step d), the openings 50 of different rows overlap radially so as to form radial cavities. Each of these cavities can be made to extend from the outer surface of the final cylindrical body to a predefined radial depth. These radial cavities can, thus, define ventilation channels formed in the thickness of the braking band of the brake disc to be obtained.

Advantageously, the sizes and shape of the openings of the individual rows are regulated as a function of the radial position that the individual row must assume in the cylindrical body with respect to the other rows, so as to regulate the internal section of each radial cavity as a function of the radial dimension. It is therefore possible to obtain radial cavities with variable internal section along the radial direction.

This operational solution is extremely more flexible and efficient than the solution that provides for the use of internal cores. Firstly, it does not require the preparation, placement and removal of the cores. Secondly, it is not limited by the need to ensure the extractability of the cores from the cylindrical body, a need that significantly limits the shapes that can be adopted for the internal cores. This system is an alternative to a system that uses disposable cores that create operational complications related to the extraction of the cores.

Operationally, the openings 50 on the fibre layer 20 can be realised by means of suitable cutting devices (illustrated only schematically in Figure 6 and indicated with 56), operated by an electronic control unit, suitably programmed for the purpose.

According to a preferred form of implementation of the method according to the invention, step e) of heating the cylindrical body is conducted at temperatures and for a period of time such as to only partially cross-link the binder resin so as to obtain a solid, semi-finished cylindrical body that is still plastically deformable.

Advantageously, as mentioned earlier, the semi-finished cylindrical body 30 thus obtained - still plastically deformable - may be subjected to step f) of cutting into slices to obtain a plurality of disc-shaped bodies 31 that can be subjected to forming. The method according to the invention can therefore comprise a step h) of forming of the individual slices of the cylindrical body obtained as a result of cutting step f).

This forming step can also be conducted on the cylindrical body in case where the latter is dimensioned so as to define, already in itself, a single disc-shaped body that defines at least the braking band of a disc brake.

Preferably, this forming step h) is conducted before post-cross-linking/post-curing heat treatment step g) (if required).

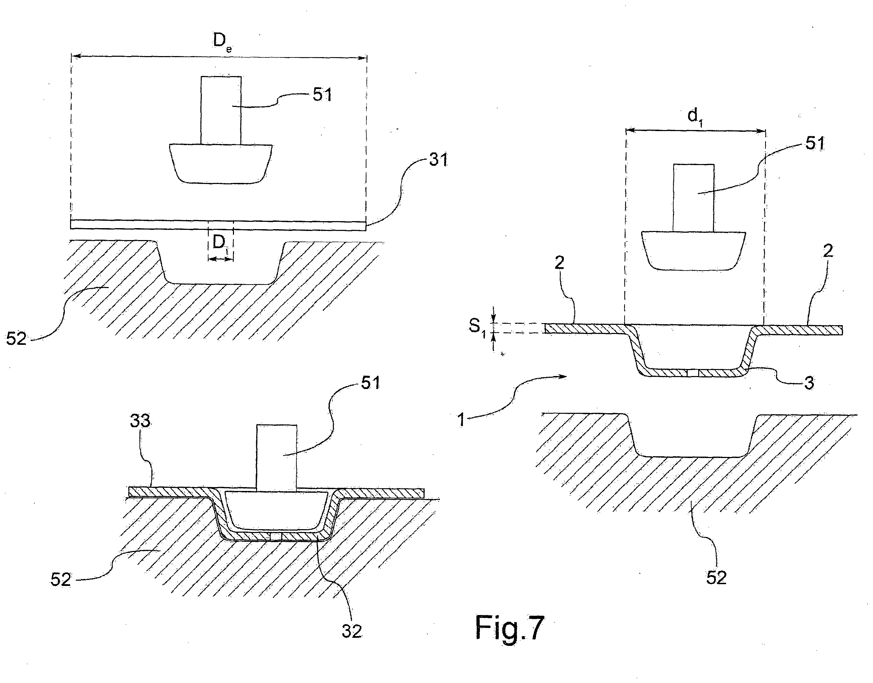

According to a particularly preferred form of implementation of the invention, as illustrated in the sequence of images of Figure 7, the aforesaid forming step h) is conducted on the cylindrical body or on the individual slices 31 of the cylindrical body by plastically deforming in the axial direction a central portion of the cylindrical body 30 or of the disc-shaped body 31 defined by the individual slice to obtain on the cylindrical body or on the disc-shaped body itself, a coaxial cap 32, axially projecting from it. Advantageously, this coaxial cap 32 (which may assume any shape as a function of the shape of the punch 51 and of the forming die 52 used for the axial plastic deformation) can be shaped so as to define the bell of the brake disc 1. The peripheral annular part 33 of the cylindrical body, or of the disc-shaped body, is not deformed but instead defines the braking band of the brake disc 1.

The production, in a single piece, of the braking band and bell of a brake disc allows significantly simplifying the process of producing a brake disc. In fact, the steps of preparing and assembling the bells with the braking bands are eliminated.

Preferably, to produce the bell and breaking band of a disc in one piece, the mandrel 10 used to produce the cylindrical body has an outer diameter D1 less than the inner diameter D1 of the braking band of the brake disc 1 to be obtained, in such a way that the cylindrical body 30 or disc-shaped body 31 defined by the individual slice extends radially inwardly beyond the annular portion 32 destined to define the braking band of the brake disc to be obtained.

Advantageously, as illustrated in particular in the block diagram of Figure 2, in the case where there is provided a step c) of impregnation of the fibre layer with the binder resin or the fibre layer is formed with the fibres already included, the method may comprise a step 1) of preheating the fibre layer 20. This preheating step 1) is conducted before step c) of impregnation with resins. Preferably, in this preheating step 1), the fibres are heated to temperatures below the cross-linking point of the resin with which the fibre layer will subsequently be impregnated. The preheating of the fibres reduces the time required for the next step of cross-linking of the resin (step e) of heating the cylindrical body) and induces a greater homogeneity in the material by favouring the sliding of the resin on the fibres.

Advantageously, as illustrated in particular in the block diagram of Figure 2, the method may comprise a step m) of preheating the resin which must be applied to the fibre layer in impregnation step b). In this preheating step m), the resin is heated to temperatures below the cross-linking point in order to reduce its viscosity and increase its homogeneity, thus favouring the adhesion and penetration of the resin into the fibre layer.

Advantageously, as illustrated in particular in the block diagram of Figure 2, the method may comprise a step n) of consolidation of the fibre layer conducted after impregnation step c). This consolidation step n) is conducted by applying pressure to the layer of fibres already impregnated in order to make the resin penetrate the fibre layer itself. Preferably, as illustrated in Figures 3, 4 and 5, this step n) is conducted via one or more pairs of opposed pressure rollers 12, between which is passed the layer of fibres impregnated with resin.

Advantageously, as illustrated in particular in the block diagram of Figure 2, the method may comprise a step o) of heating the fibre layer already impregnated with resin. This step o) is conducted between impregnation step b) and winding step d). In this heating step o), the impregnated fibre layer is progressively heated either up to temperatures near, but lower than that of the cross-linking of the resin, or to the cross-linking temperature of the resin. Operationally, thanks to this heating step o), the layer of impregnated fibres is gradually heated so as to be already at operating temperature when it is wound around the mandrel and subjected to step e) of heating for cross-linking. This further reduces treatment times, without adopting aggressive thermal profiles.

Preferably, as illustrated in the plant diagrams of Figures 3, 4 and 5, the operating steps of the method are conducted continuously on the fibre layer 20 that is progressively formed and continuously wound around the winding mandrel 10.

More in detail, according to the plant diagram shown in Figure 3, the fibres are fed continuously from one or more reels of continuous fibres (i.e., reinforcing fibres) to the winding mandrel 10 through a series of return/tensioning rollers 13. The fibres that form the fibre layer 20 can be fed already in the form of fabric, woven fibre cloths or non-woven fabric. In particular, the fibres (in whatever form) are preheated (step 1)) by means of one or more heating devices 41 arranged along the path of the fibres upstream of the area of impregnation with resin. In this preheating step 1) the fibres can be heated to a temperature of 80 °C to 120 °C. As already said above, the heating of the fibres reduces the time required for the next step of (partial or complete) cross-linking of the resin and induces a greater homogeneity in the material by favouring the sliding of the resin on the fibres. In a parallel line, a resin layer (pure or mixed with additives) is deposited on a transport film. The resin can be preheated to a temperature below the cross-linking point through one or more heating means 42 disposed along the path of the resin upstream of the area of contact with the fibres. As already said, the preheating of the resin serves to reduce its viscosity and increase its homogeneity. In this preheating step m), the resin may be heated to a temperature between 80 °C and 100 °C for epoxy resins and between 100 °C and 120 °C for phenolic resins. The two lines (fibre and resin) are conveyed and put into contact preferably in a consolidation step n). In this step, the fibre layer 20 impregnated with resin is passed between one or more pairs of opposed pressure rollers 12 that, by applying a pressure on the layer, induce the penetration of the resin in the fibre layer itself. Upstream and/or downstream of the pressure rollers 12, heating means 43 can be provided that perform step o) of heating the fibre layer already impregnated with resin. The impregnated fibre layer is progressively heated in such a way that the fibre layer with resin reaches the cross-linking temperature of the resin at the time of being wound around the mandrel 10. In this heating step o), the fibre layer impregnated with resin can be progressively heated to a temperature near, but lower than that of the cross-linking of the resin, or possibly also to the cross-linking temperature of the resin. In correspondence of the winding mandrel 10, there is a series of pressure rollers 11 that allow to apply pressure on the cylindrical body being formed. Preferably, the pressure rollers are disposed downstream of the needling zone with respect to the winding direction of the fibre layer, i.e., downstream from the needling machine 60 provided in the example of the diagram of Figure 3. The pressure on the cylindrical body being formed can be applied in addition to, or replacement of the pressure rollers by tensioning the fibre layer itself through the return rollers of the feeding system of the fibre layer 20. In the case where the binder resins are epoxy, the pressure is preferably between 1 and 10 bar. In the case where the binder resins are phenolic, the pressure is preferably between 1 and 5 bar. The fibre layer 20 is needled in correspondence of the winding area (step p)) in such a way that all the new portions of the fibre layer 20 added to the cylindrical body being formed are connected to the underlying portions thanks to the substantially radial distribution imposed by the needling to a portion of the fibres. During winding of the fibre layer around the mandrel, the cylindrical body being formed is then heated (heating step e)). This treatment is performed by heating means 40 arranged externally to the cylindrical body being formed. These heating means, which can be structured so as to surround the body being formed as circumferentially as possible, may be of any type suitable for the purpose, such as of the resistive type, by means of IR and/or UV lamps, ion bombardment, etc. When the cylindrical body reaches the desired size, the line can be interrupted and the product may be removed from the mandrel to be directly subjected to the post-curing step in an oven or be first cut into slices to undergo any forming treatments (step h)) and then subjected to post-curing or be used to achieve multi-layer disc-shaped assemblies.

Preferably, the heating means 40 are disposed downstream of the needling zone with respect to the winding direction of the fibre layer.

According to the plant diagram shown in Figure 4, the fibres are fed in the form of chopped fibres and deposited on a resin layer supported by a transport film 14. This plant can also be fed with continuous fibres that can be deposited according to preferential directions on the resin layer on the transport film. A second resin layer can be deposited on the fibre layer. Advantageously heating means 42 may be provided (for performing step m) of preheating of the resin). One or more pairs of pressure rollers 12 are provided for performing consolidation step n). Upstream and/or downstream of the pressure rollers 12, heating means 43 of the fibre layer with resin can be provided (to perform preheating step o)). Similarly to the diagram of Figure 3, the fibre layer with resin is then wound around the mandrel immediately undergoing needling and then subjected to other treatments.

The plant diagram of Figure 5 differs from the diagrams of Figures 3 and 4 for the fact that the fibres (in the form of continuous fibres, woven or non-woven) are impregnated by immersion in a bath of liquid resin (optionally containing additives) contained in a tank 15. Advantageously, the liquid resin can be pre-heated. At the exit of the tank, the fibre layer 20 with resin passes through at least one pair of pressure rollers 12 in a consolidation step n). These rollers 12 can be heated. The line then passes through an oven 16 that promotes the cross-linking of the resin. Preferably, this oven is kept at a temperature between 160 °C and 180 °C for epoxy resins and between 150 °C and 165 °C for phenolic resins. At the exit of the oven, the fibre layer with resin can be subjected to further heating by heating means 43 disposed along the path and is then wound around the mandrel 10 where it is treated as previously described.

In all three plants illustrated in Figures 3, 4 and 5, it can be provided - in combination with, or alternatively to, the external heating means 40 in the vicinity of the mandrel - that the mandrel 10 itself be heating.

An object of this invention is a plant for implementing the method of making brake discs in fibre-reinforced material according to this invention, in particular as described above.

An object of this invention is a brake disc for disc brake, obtained with the method according to this invention, in particular as described above.

As can be appreciated from the description, the method according to the invention allows overcoming the drawbacks presented in the prior art.

Thanks to the method according to this invention, it is possible to obtain mechanically coherent disc-shaped bodies. The needling step provided at the beginning of the winding of each new portion of the fibre layer allows consolidating the cylindrical body being formed, solidarizing the coils with each other and imposing a substantially radial distribution on at least a portion of the fibres. Thanks to this distribution, at least a part of the fibres are arranged in a connection between the coil-shaped structures generated by the winding of the fibre layer around the mandrel. In fact, thanks to the needling, part of the fibres are disposed transversely between one coil and another, constituting connection bridges. Regardless of the winding direction of the fibre layer, the needling allows connecting the coils with each other. In this way, therefore, the risk is reduced of generating coil-shaped structures that are not coherent with each other in the radial direction. This improves the mechanical and thermal properties of the disc itself.

In general, the mechanical and thermal properties of the final body are improved.

Thanks to the method according to this invention, it is possible to obtain from a single semi-finished body (green body) a plurality of disc-shaped bodies 31, each of which is then workable to obtain at least the braking band of a brake disc 1. The method according to the invention allows greatly simplifying the production process of brake discs made of fibre-reinforced material.

There are many advantages in terms of operational simplification. It is no longer necessary to control n distinct processes for making the green body, but only one. In fact, the semi-finished disc-shaped bodies (green bodies) that constitute the starting point for the construction of the brake discs no longer need to be made one by one for each individual disc, with n steps of moulding and cross-linking of the resin.

The advantage is not only in terms of reduced operational steps, but also in terms of simplifying the quality control of the products obtained. In fact, the production of the disc-shaped bodies in batches, rather than individual pieces, reduces the operations related to quality control. Moreover, one has a production with more homogeneous characteristics, both in terms of distribution of the fibres in the matrix and in terms of the degree of cross-linking of the binder resin. There are clear benefits in terms of reproducibility of results.

The method according to this invention provides high flexibility in terms of the ability to control and adjust the orientation of the fibres and/or the composition of the materials that form the cylinder (in terms of the composition of the resins, fibres and/or additives, if present) inside the cylindrical body itself and thus inside the individual disc-shaped body (defined by the cylindrical body in the its entirety) or of the disc-shaped bodies that form at least the braking bands of the brake discs or at least portions of them.

The method according to this invention allows making brake discs with ventilation channels without having to necessarily use shaped cores. This makes the production process extremely more flexible and efficient with respect to the solution that provides for the use of internal cores. It does not require the preparation, placement and removal of the cores. Secondly, the process is not limited by the need to ensure the extractability of the cores from the cylindrical body.

With the method according to the invention, one can form ventilation channels with "uncommon" geometries and dimensions and with undercuts and geometric anomalies. It is not possible to do this with conventional methods that, on the contrary, use internal cores to be extracted later.

The method according to this invention also allows making a disc brake in which braking band and bell are made in one piece. This constitutes an important element of simplification of the production process of the discs. In fact, the steps of preparing and assembling the bells with the braking bands are eliminated.

A person skilled in the art, in order to satisfy contingent and specific needs, may make numerous modifications and variations to the brake discs described above, all however contained within the scope of the invention as defined by the following claims.

## Claims

1. Method for making brake discs in material reinforced with fibres, each brake disc (1) comprising a braking band (2) having a predefined thickness (s), said method comprising the following operating steps:
a) providing a winding mandrel (10), having a predefined outer diameter (D1);
b) forming at least one layer of fibres (20) having a predefined width (W);
d) winding the fibre layer (20) around the mandrel (10) to form a coaxially hollow cylindrical body (30), having a predefined outer diameter (De) and an inner diameter (Di) substantially equivalent to the diameter (D1) of the mandrel (10), the fibre layer being wound around the mandrel according to at least one winding direction substantially parallel to the direction of the length (L) of the layer (20);
**characterised in that** it comprises a step p) of needling the cylindrical body at least according to a substantially radial direction so as to direct at least a part of the fibres of the fibre layer (20) according to this direction by arranging such fibres in connection between two or more adjacent coils of the fibre layer wound around the mandrel.

2. Method according to claim 1, wherein the needling is carried out substantially at the winding area of the fibre layer (20) around the cylindrical body (30) being formed.

3. Method according to claim 1 or 2, wherein the needling is performed at a predefined radial depth, depending on the number of coils to be involved, starting from the surface of the cylindrical body being formed.

4. Method according to one or more of the previous claims, comprising a step f) of cutting the semi-finished cylindrical body in slices transversally to the longitudinal axis of said cylindrical body according to predefined thicknesses (s1), each slice being a disc-shaped body (31) which defines at least the braking band (2) of a brake disc (1) or constitutes an annular portion of the thickness of the braking band (2) of a brake disc (1) .

5. Method according to one or more of the previous claims, wherein during the step d) of winding, a pressure is applied to the layer of fibres (20) being wound to make the portion of the layer of fibres being wound adhere to the cylindrical body being formed.

6. Method according to one or more of the previous claims, wherein during the step d) of winding, the winding direction of said at least one layer of fibres around the mandrel is varied to vary the orientation of the fibres inside the cylindrical body being formed.

7. Method according to one or more of the previous claims, wherein said at least one layer of fibres (20) has an orientation of the fibres and/or variable composition along its length and/or width.

8. Method according to one or more of the previous claims, wherein during the step d) of winding, several layers of fibres (20) are wound around the mandrel, having different orientations and/or composition of the fibres.

9. Method according to one or more of the previous claims, comprising a step c) of impregnating the fibre layer (20) with at least one binder resin prior to the step d) of winding around the mandrel.

10. Method according to one or more of the claims from 1 to 8, wherein the fibre layer is obtained by extrusion and subsequent drawing of a mixture comprising plasticising components and fibres.

11. Method according to claim 9 or 10, comprising a step e) of heating the coaxially hollow cylindrical body at temperatures and for a period of time such as to at least partially cross-link the binder resin so as to obtain a solid, semi-finished cylindrical body.

12. Method according to claim 11, wherein the needling is performed at a surface coil of the layer of fibres not yet subjected to the heating performed in step e).

13. Method according to claim 11 or 12, comprising a step h) of forming the cylindrical body (30) or of individual slices (31) of the cylindrical body obtained as a result of the cutting step f), such forming step h) being conducted preferably before the step g) of post cross-linking heat treatment in the case in which said step g) is performed.

14. Method according to claim 13, wherein the forming step h) is carried out on the cylindrical body (30) or on individual slices (31) of the cylindrical body (30) by plastically deforming a central portion of the cylindrical body or of the disc-shaped body defined by the single slice in the axial direction to obtain on said cylindrical body or disc-shaped body a coaxial cap (32), axially projecting from it, said coaxial cap (32) preferably defining the bell of the brake disc (1), the peripheral annular part of the non-deformed cylindrical body or of the disc-shaped body defining the braking band (2) of the brake disc.

15. Method according to claim 4, wherein at least the braking band (2) of a brake disc (1) is obtained by overlapping in the direction of the thickness (s) of said disc one or more of the disc-shaped bodies obtained by cutting the cylindrical body (30) with one or more layers of fibres impregnated with at least a binder resin, so as to obtain a multi-layer disc-shaped assembly.

16. Method according to claim 15 and one or more of the claims from 1 to 14, wherein said multi-layer disc-shaped assembly is subjected to needling performed in a direction substantially orthogonal to the plane of the brake disc (1) to join said one or more disc-shaped bodies and said layers of impregnated fibres to each other.

## Patentansprüche

1. Verfahren zur Herstellung von Bremsscheiben in mit Fasern verstärktem Material, wobei jede Bremsscheibe (1) ein Bremsband (2) umfasst, welches eine vordefinierte Dicke (s) aufweist, wobei das Verfahren die folgenden Arbeitsschritte umfasst:
a) Bereitstellen eines Wickeldorns (10), welcher einen vordefinierten äußeren Durchmesser (D1) aufweist;
b) Bilden wenigstens einer Schicht aus Fasern (20), welche eine vordefinierte Breite (W) aufweist;
d) Wickeln der Faserschicht (20) um den Dorn (10) herum, um einen koaxial hohlen zylindrischen Körper (30) zu bilden, welcher einen vordefinierten äußeren Durchmesser (De) und einen inneren Durchmesser (Di) aufweist, welcher im Wesentlichen äquivalent zu dem Durchmesser (D1) des Dorns (10) ist, wobei die Faserschicht gemäß wenigstens einer Wickelrichtung, welche im Wesentlichen parallel zu der Richtung der Länge (L) der Schicht (20) ist, um den Dorn herum gewickelt wird;
**dadurch gekennzeichnet, dass** es einen Schritt p) eines Nadelns des zylindrischen Körpers wenigstens gemäß einer im Wesentlichen radialen Richtung umfasst, um durch ein Anordnen solcher Fasern in Verbindung zwischen zwei oder mehr benachbarten Spulen der um den Dorn gewickelten Faserschicht wenigstens einen Teil der Fasern der Faserschicht (20) gemäß dieser Richtung auszurichten.

2. Verfahren nach Anspruch 1, wobei das Nadeln im Wesentlichen in dem Wicklungsbereich der Faserschicht (20) um den gebildeten zylindrischen Körper (30) herum ausgeführt wird.

3. Verfahren nach Anspruch 1 oder 2, wobei das Nadeln in Abhängigkeit der Anzahl von einzubindenden Spulen, beginnend von der Oberfläche des gebildeten zylindrischen Körpers, in einer vordefinierten radialen Tiefe durchgeführt wird.

4. Verfahren nach einem oder mehreren der vorhergehenden Ansprüche, umfassend einen Schritt f) eines Schneidens des halbfertigen zylindrischen Körpers in zu der longitudinalen Achse des zylindrischen Körpers transversale Stücke gemäß vordefinierten Dicken (s1), wobei jedes Stück ein scheibenförmiger Körper (31) ist, welcher wenigstens das Bremsband (2) einer Bremsscheibe (1) definiert oder einen ringförmigen Abschnitt der Dicke des Bremsbandes (2) einer Bremsscheibe (1) ausmacht.

5. Verfahren nach einem oder mehreren der vorhergehenden Ansprüche, wobei während des Schritts d) des Wickelns ein Druck auf die gewickelte Schicht aus Fasern (20) aufgebracht wird, um den Abschnitt der gewickelten Schicht aus Fasern an dem gebildeten zylindrischen Körper anhaften zu lassen.

6. Verfahren nach einem oder mehreren der vorhergehenden Ansprüche, wobei während des Schritts d) des Wickelns die Wickelrichtung der wenigstens einen Schicht aus Fasern um den Dorn herum variiert wird, um die Ausrichtung der Fasern innerhalb des gebildeten zylindrischen Körpers zu variieren.

7. Verfahren nach einem oder mehreren der vorhergehenden Ansprüche, wobei die wenigstens eine Schicht aus Fasern (20) eine Ausrichtung der Fasern und/oder eine variable Zusammensetzung entlang ihrer Länge und/oder Breite aufweist.

8. Verfahren nach einem oder mehreren der vorhergehenden Ansprüche, wobei während des Schritts d) des Wickelns mehrere Schichten aus Fasern (20) um den Dorn herum gewickelt werden, welche verschiedene Ausrichtungen und/oder eine verschiedene Zusammensetzung der Fasern aufweisen.

9. Verfahren nach einem oder mehreren der vorhergehenden Ansprüche, umfassend einen Schritt c) eines Imprägnierens der Faserschicht (20) mit wenigstens einem Bindemittelharz vor dem Schritt d) des Wickelns um den Dorn herum.

10. Verfahren nach einem oder mehreren der Ansprüche 1 bis 8, wobei die Faserschicht durch eine Extrusion und ein nachfolgendes Ziehen eines Gemisches erhalten wird, welches plastifizierende Komponenten und Fasern umfasst.

11. Verfahren nach Anspruch 9 oder 10, umfassend einen Schritt e) eines Erwärmens des koaxial hohlen zylindrischen Körpers auf Temperaturen und über einen Zeitraum, um das Bindemittelharz wenigstens teilweise zu vernetzen, um einen festen, halbfertigen zylindrischen Körper zu erhalten.

12. Verfahren nach Anspruch 11, wobei das Nadeln an einer Oberflächenspule der Schicht aus Fasern durchgeführt wird, welche dem in Schritt e) durchgeführten Erwärmen noch nicht unterzogen worden ist.

13. Verfahren nach Anspruch 11 oder 12, umfassend einen Schritt h) eines Bildens des zylindrischen Körpers (30) oder von individuellen Stücken (31) des zylindrischen Körpers, welche als ein Ergebnis des Schneideschritts f) erhalten werden, wobei ein solcher Bildeschritt h) in dem Fall, in welchem der Schritt g) durchgeführt wird, vorzugsweise vor dem Schritt g) einer nachvernetzenden Wärmebehandlung erfolgt.

14. Verfahren nach Anspruch 13, wobei der Bildeschritt h) durch ein plastisches Verformen eines zentralen Abschnitts des zylindrischen Körpers oder des scheibenförmigen Körpers, welcher durch das einzelne Stück definiert ist, in der axialen Richtung an dem zylindrischen Körper (30) oder an individuellen Stücken (31) des zylindrischen Körpers (30) ausgeführt wird, um an dem zylindrischen Körper oder dem scheibenförmigen Körper eine koaxiale Kappe (32) zu erhalten, welche axial von ihm vorsteht, wobei die koaxiale Kappe (32) vorzugsweise den Topf / die Glocke der Bremsscheibe (1) definiert, wobei der periphere ringförmige Teil des nicht verformten zylindrischen Körpers oder des scheibenförmigen Körpers das Bremsband (2) der Bremsscheibe definiert.

15. Verfahren nach Anspruch 4, wobei wenigstens das Bremsband (2) der Bremsscheibe (1) durch ein Überlappen eines oder mehrerer der scheibenförmigen Körper, welche durch das Schneiden des zylindrischen Körpers (30) erhalten worden sind, mit einer oder mehreren Schichten aus Fasern, welche mit wenigstens einem Bindemittelharz imprägniert worden sind, in der Richtung der Dicke (s) der Scheibe erhalten wird, um eine mehrschichtige, scheibenförmige Anordnung zu erhalten.

16. Verfahren nach Anspruch 15 und einem oder mehreren der Ansprüche 1 bis 14, wobei die mehrschichtige, scheibenförmige Anordnung einem Nadeln unterzogen wird, welches in einer zu der Ebene der Bremsscheibe (1) im Wesentlichen orthogonalen Richtung durchgeführt wird, um den einen oder die mehreren scheibenförmigen Körper und die Schichten aus imprägnierten Fasern miteinander zu verbinden.

## Revendications

1. Procédé de réalisation de disques de frein en matériau renforcé par des fibres, chaque disque de frein (1) comprenant une bande de freinage (2) ayant une épaisseur prédéfinie (s), ledit procédé comprenant les étapes opérationnelles suivantes :
a) fourniture d'un mandrin d'enroulement (10), ayant un diamètre extérieur prédéfini (D1) ;
b) formation d'au moins une couche de fibres (20) ayant une largeur prédéfinie (W) ;
d) enroulement de la couche de fibres (20) autour du mandrin (10) pour former un corps cylindrique coaxialement creux (30), ayant un diamètre extérieur prédéfini (De) et un diamètre intérieur (Di) sensiblement équivalent au diamètre (D1) du mandrin (10), la couche de fibres étant enroulée autour du mandrin selon au moins une direction d'enroulement sensiblement parallèle à la direction de la longueur (L) de la couche (20) ;
**caractérisé en ce qu'**il comprend une étape p) d'aiguilletage du corps cylindrique au moins selon une direction sensiblement radiale de façon à diriger au moins une partie des fibres de la couche de fibres (20) selon cette direction par agencement de telles fibres en liaison entre deux enroulements adjacents ou plus de la couche de fibres enroulée autour du mandrin.

2. Procédé selon la revendication 1, dans lequel l'aiguilletage est réalisé sensiblement au niveau de la zone d'enroulement de la couche de fibres (20) autour du corps cylindrique (30) qui est formé.

3. Procédé selon la revendication 1 ou 2, dans lequel l'aiguilletage est réalisé à une profondeur radiale prédéfinie, dépendant du nombre d'enroulements à impliquer, en commençant par la surface du corps cylindrique qui est formé.

4. Procédé selon une ou plusieurs des revendications précédentes, comprenant une étape f) de coupe du corps cylindrique semi-fini en tranches transversalement à l'axe longitudinal dudit corps cylindrique selon des épaisseurs prédéfinies (s1), chaque tranche étant un corps en forme de disque (31) qui définit au moins la bande de freinage (2) d'un disque de frein (1) ou constitue une portion annulaire de l'épaisseur de la bande de freinage (2) d'un disque de frein (1).

5. Procédé selon une ou plusieurs des revendications précédentes, dans lequel pendant l'étape d) d'enroulement, une pression est appliquée à la couche de fibre (20) qui est enroulée pour faire adhérer la portion de la couche de fibres qui est enroulée au corps cylindrique qui est formé.

6. Procédé selon une ou plusieurs des revendications précédentes, dans lequel pendant l'étape d) d'enroulement, la direction d'enroulement de ladite au moins une couche de fibres autour du mandrin varie pour faire varier l'orientation des fibres à l'intérieur du corps cylindrique qui est formé.

7. Procédé selon une ou plusieurs des revendications précédentes, dans lequel ladite au moins une couche de fibres (20) a une orientation des fibres et/ou composition variable le long de sa longueur et/ou largeur.

8. Procédé selon une ou plusieurs des revendications précédentes, dans lequel pendant l'étape d) d'enroulement, plusieurs couches de fibres (20) sont enroulées autour du mandrin, ayant différentes orientations et/ou compositions des fibres.

9. Procédé selon une ou plusieurs des revendications précédentes, comprenant une étape c) d'imprégnation de la couche de fibres (20) avec au moins une résine liante avant l'étape d) d'enroulement autour du mandrin.

10. Procédé selon une ou plusieurs des revendications 1 à 8, dans lequel la couche de fibres est obtenue par extrusion et traction subséquente d'un mélange comprenant des composants et fibres plastifiants.

11. Procédé selon la revendication 9 ou 10, comprenant une étape e) de chauffage du corps cylindrique coaxialement creux à des températures et pour une période de temps de sorte à réticuler au moins partiellement la résine liante de façon à obtenir un corps cylindrique semi-fini solide.

12. Procédé selon la revendication 11, dans lequel l'aiguilletage est réalisé au niveau d'un enroulement de surface de la couche de fibres non encore soumise au chauffage réalisé dans l'étape e).

13. Procédé selon la revendication 11 ou 12, comprenant une étape h) de formation du corps cylindrique (30) ou de tranches individuelles (31) du corps cylindrique obtenues suite à l'étape de coupe f), une telle étape de formation h) étant réalisée préférablement avant l'étape g) de traitement de chauffage post réticulation dans le cas dans lequel ladite étape g) est réalisée.

14. Procédé selon la revendication 13, dans lequel l'étape de formation h) est réalisée sur le corps cylindrique (30) ou sur des tranches individuelles (31) du corps cylindrique (30) par déformation plastique d'une portion centrale du corps cylindrique ou du corps en forme de disque défini par la tranche unique dans la direction axiale pour obtenir sur ledit corps cylindrique ou corps en forme de disque, un capuchon coaxial (32), faisant axialement saillie de celui-ci, ledit capuchon coaxial (32) définissant de préférence la cloche du disque de frein (1), la partie annulaire périphérique du corps cylindrique non déformé ou du corps en forme de disque définissant la bande de freinage (2) du disque de frein.

15. Procédé selon la revendication 4, dans lequel au moins la bande de freinage (2) d'un disque de frein (1) est obtenue par chevauchement dans la direction de l'épaisseur (s) dudit disque d'un ou plusieurs corps en forme de disque obtenus par coupe du corps cylindrique (30) avec une ou plusieurs couches de fibres imprégnées avec au moins une résine liante, de façon à obtenir un ensemble en forme de disque multicouches.

16. Procédé selon la revendication 15 et une ou plusieurs des revendications 1 à 14, dans lequel ledit ensemble en forme de disque multicouche est soumis à l'aiguilletage réalisé dans une direction sensiblement orthogonale au plan du disque de frein (1) pour joindre lesdits un ou plusieurs corps en forme de disque et lesdits couches de fibres imprégnées l'une à l'autre.
